# DEMANDE DE BREVET EUROPEEN

(11) **EP 1 679 920 A1**
(43) Date de publication de la demande: **12.07.2006**
(21) Numéro de dépôt: 05112955.9
(22) Date de dépôt: 23.12.2005
(51) Int. Cl.: H04Q 7/34, H04Q 7/36

(54) **Procédé et système pour l'exploitation d'un réseau cellulaire de communications mobiles**

(30) Priorité: 06.01.2005 FR 0550053
(71) Demandeur: EVOLIUM SAS, 75008 Paris (FR)
(72) Inventeur: De Mathan, Béatrix, 75016, Paris (FR); Brethereau, Alain, 78220, Viroflay (FR); Houllier, Jean-Roch, 91240, Saint Michel sur Orge (FR)
(74) Mandataire: El Manouni, Josiane

(57) **Abrégé**

Procédé pour l'exploitation d'un réseau cellulaire de communications mobiles, ledit procédé comportant des étapes de :
- définition (20) d'au moins un critère d'appartenance de cellules à au moins un groupe de cellules, dit classe opérationnelle,
- définition (21) d'au moins une règle permettant d'associer différentes cellules d'une même classe opérationnelle à différents modes de réalisation d'au moins une opération d'optimisation de réseau radio,
- constitution (22) d'au moins une classe opérationnelle, sur la base dudit au moins un critère,
- association (23) de différentes cellules d'une même classe opérationnelle à différents modes de réalisation d'au moins une opération d'optimisation de réseau radio, sur la base de ladite au moins une règle,
- réalisation (24) d'au moins une opération d'optimisation de réseau radio, pour l'ensemble des cellules d'une même classe opérationnelle, et selon différents modes de réalisation associés à différentes cellules de ladite classe.

## Description

La présente invention concerne d'une manière générale les systèmes de communications mobiles.

D'une manière générale, les systèmes de communications mobiles font l'objet de normalisation, et pour plus d'informations on pourra se reporter aux normes correspondantes, publiées par les organismes de normalisation correspondants.

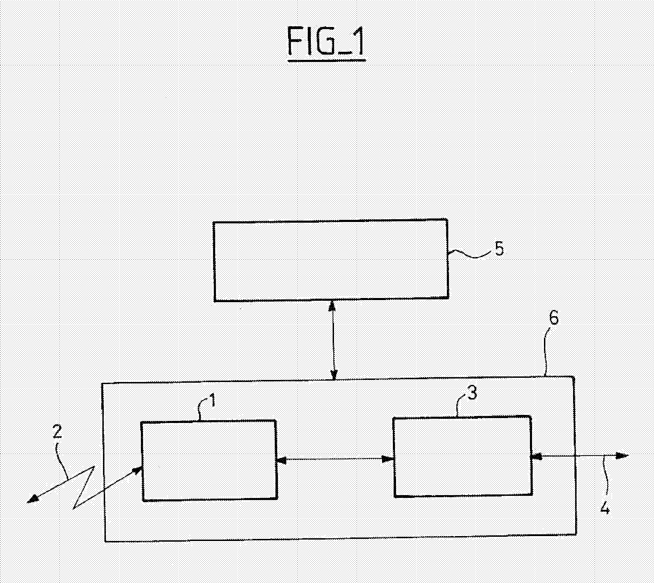

On rappelle simplement qu'un système de communications mobiles peut, comme rappelé sur la figure 1, se décomposer en trois sous-ensembles :
- un sous-système radio, noté 1, ou « réseau radio », essentiellement en charge des fonctions de transmission sur l'interface radio (notée 2) et de gestion des ressources radio, ce sous-système radio étant aussi appelé BSS (« Base Station Sub-System ») dans des systèmes tels que notamment le GSM (« Global System for Mobile communications ») ou encore RNS (« Radio Netvrork Subsystem ») dans des systèmes tels que notamment l'UMTS (« Universal Mobile Telecommunications System»), et ce sous-système radio comportant lui-même des éléments de réseau tels que des stations de base (appelés aussi BTS (pour « Base Transceiver Station ») dans des systèmes tels que le GSM, ou Node B dans des systèmes tels que l'UMTS) et des contrôleurs de stations de base (appelés aussi BSC (pour « Base Station Controller») dans des systèmes tels que le GSM, ou RNC (pour « Radio Netvrork Controller ») dans des systèmes tels que l'UMTS),
- un sous-système d'acheminement, noté 3, ou « réseau fixe », ou NSS (« Network Sub-System »), essentiellement en charge des fonctions d'établissement des appels et de gestion de la mobilité, ce sous-système d'acheminement étant en relation d'une part avec le sous-système radio et d'autre part (comme illustré en 4) avec des réseaux extérieurs (non illustrés spécifiquement),
- un sous-système d'exploitation et de maintenance, noté 5, ou OSS (« Operation Sub-System »), permettant essentiellement à l'opérateur de gérer son réseau (noté 6, formé du « réseau radio » 1 et du « réseau fixe » 3).

L'exploitation du réseau recouvre différentes tâches, dont une particulièrement importante correspond à l'optimisation du réseau radio. D'une manière générale, dans cette tâche d'optimisation du réseau radio, l'objectif pour l'opérateur (appelé aussi dans ce qui suit optimiseur, ou utilisateur) est d'atteindre la qualité de service souhaitée tout en utilisant aussi efficacement que possible les ressources radio disponibles.

L'optimisation du réseau radio recouvre elle-même différentes fonctions, notamment des fonctions de diagnostic de problèmes du réseau et/ou d'analyse de la qualité de service, et des fonctions d'optimisation de paramétrage radio sur la base de tels diagnostic et/ou analyse.

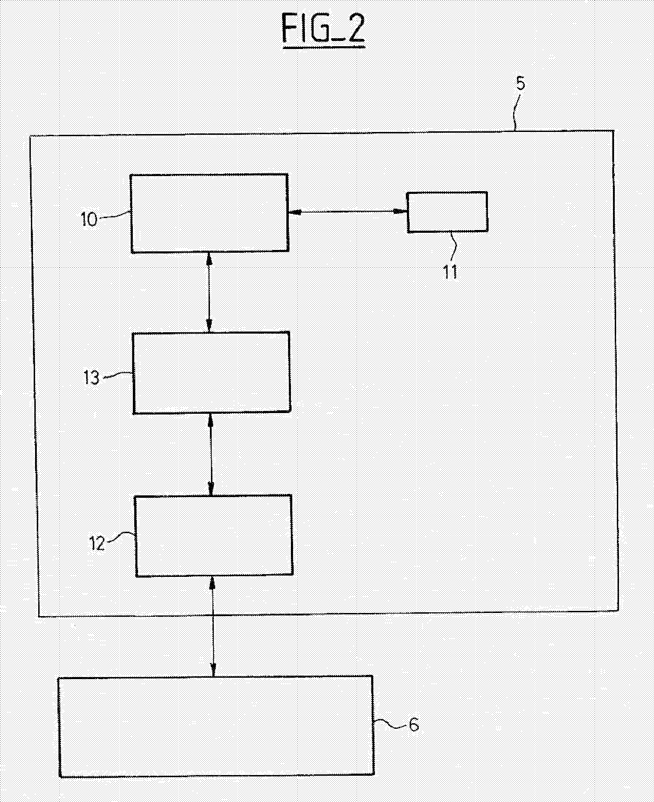

On rappelle en outre qu'un système pour l'exploitation d'un réseau de communications mobiles peut lui-même, comme rappelé sur la figure 2, se décomposer en trois sous-systèmes :
- un sous-système noté 10, en charge essentiellement des différents traitements correspondant à la mise en oeuvre des différentes tâches d'exploitation, ce sous-système étant en relation avec l'opérateur via des stations de travail notées 11,
- un sous-système noté 12, en charge essentiellement d'appliquer au réseau 6 différentes commandes issues du sous-système 10, et de recevoir du réseau 6 différentes données nécessaires aux traitements réalisés par le sous-système 10,
- un sous-système, noté 13, réalisant des fonctions de communication entre les sous-systèmes 10 et 12.

D'une manière générale, l'accroissement du trafic à gérer et, par conséquent, le nombre toujours plus grand d'éléments de réseau mis en place, et donc de paramètres à traiter, mais aussi la variété et la complexité des informations hétérogènes à analyser (qu'elles proviennent du réseau lui-même ou de son environnement géographique) rendent extrêmement complexes les tâches d'optimisation, et il devient alors important de simplifier et/ou faciliter le travail de l'opérateur. La présente invention permet notamment de répondre à ces besoins.

Un des objets de la présente invention est un procédé pour l'exploitation d'un réseau cellulaire de communications mobiles, ledit procédé comportant des étapes de :
- définition d'au moins un critère d'appartenance de cellules à au moins un groupe de cellules, dit classe opérationnelle,
- définition d'au moins une règle permettant d'associer différentes cellules d'une même classe opérationnelle à différents modes de réalisation d'au moins une opération d'optimisation de réseau radio,
- constitution d'au moins une classe opérationnelle, sur la base dudit au moins un critère,
- association de différentes cellules d'une même classe opérationnelle à différents modes de réalisation d'au moins une opération d'optimisation de réseau radio, sur la base de ladite au moins une règle,
- réalisation d'au moins une opération d'optimisation de réseau radio, pour l'ensemble des cellules d'une même classe opérationnelle, et selon différents modes de réalisation associés à différentes cellules de ladite classe.

Un autre objet de la présente invention est un système pour l'exploitation d'un réseau cellulaire de communications mobiles, ledit système comportant :
- des moyens pour définir au moins un critère d'appartenance de cellules à au moins un groupe de cellules, dit classe opérationnelle,
- des moyens pour définir au moins une règle permettant d'associer différentes cellules d'une même classe opérationnelle à différents modes de réalisation d'au moins une opération d'optimisation de réseau radio,
- des moyens pour constituer au moins une classe opérationnelle, sur la base dudit au moins un critère,
- des moyens pour associer différentes cellules d'une même classe opérationnelle à différents modes de réalisation d'au moins une opération d'optimisation de réseau radio, sur la base de ladite au moins une règle,
- des moyens pour réaliser au moins une opération d'optimisation de réseau radio, pour l'ensemble des cellules d'une même classe opérationnelle, et selon différents modes de réalisation associés à différentes cellules de ladite classe.

Un autre objet de la présente invention est une station de travail pour l'exploitation d'un réseau cellulaire de communications mobiles, ladite station comportant :
- des moyens pour permettre à l'utilisateur de définir au moins un critère d'appartenance de cellules à au moins un groupe de cellules, dit classe opérationnelle,
- des moyens pour permettre à l'utilisateur de définir au moins une règle permettant d'associer différentes cellules d'une même classe opérationnelle à différents modes de réalisation d'au moins une opération d'optimisation de réseau radio,
- des moyens pour permettre à l'utilisateur de réaliser au moins une opération d'optimisation de réseau radio, pour l'ensemble des cellules d'une même classe opérationnelle, et selon différents modes de réalisation associés à différentes cellules de ladite classe.

D'autres objets et caractéristiques de la présente invention apparaîtront à la lecture de la description suivante d'exemples de réalisation, faite en relation avec les dessins ci-annexés dans lesquels:
- la figure 1 rappelle l'architecture générale d'un système cellulaire de communications mobiles,
- la figure 2 rappelle l'architecture générale d'un système pour l'exploitation d'un réseau cellulaire de communications mobiles,
- la figure 3 est destinée à illustrer les étapes d'un procédé suivant un des différents aspects de l'invention.

Suivant un de ses différents aspects, la présente invention propose de définir des groupes de cellules appelés aussi classes opérationnelles, regroupant des cellules qui vérifient un ou plusieurs critères choisis par l'opérateur. Une fois définies, les classes opérationnelles peuvent être utilisées par l'opérateur dans une ou plusieurs opérations d'optimisation du réseau radio, telles que notamment : optimisation de la configuration des ressources radio (une telle optimisation incluant notamment un réglage de paramètres radio, appelé aussi « tuning »), suivi ou analyse de la qualité de service, diagnostic de problèmes, analyse cartographique, ...etc. Les classes opérationnelles peuvent ainsi être utilisées pour effectuer globalement de telles opérations pour l'ensemble des cellules d'une même classe opérationnelle. Les classes opérationnelles sont en outre définies de manière flexible, l'opérateur pouvant en effet définir les classes opérationnelles selon tout critère. Les classes opérationnelles peuvent en outre être constituées de façon dynamique.

Divers critères d'appartenance de cellules à une classe opérationnelle peuvent être définis. En outre, des combinaisons de plusieurs critères peuvent être utilisées.

Une classe opérationnelle peut alors être constituée à partir de cellules vérifiant le ou les critères considérés. En d'autres termes les cellules vérifiant ce ou ces critères sont sélectionnées pour constituer une classe opérationnelle.

A titre d'exemple de critères, on peut citer :
- des critères basés sur des paramètres de configuration radio,
- des critères basés sur des indicateurs de qualité de service,
- des critères basés sur des paramètres de topologie du réseau,
- des critères basés sur des caractéristiques de cellules,
- des critères basés sur des paramètres de relations de voisinage entre cellules,
- des critères de type géo-marketing,
- des critères de type géographique,
- des critères de type temporel,
- ...etc.

A titre d'exemple de sélection de cellules vérifiant un critère basé sur des paramètres de configuration radio, on pourra sélectionner par exemple toutes les cellules telles qu'un ou plusieurs paramètres d'activation de service et/ou fonction de télécommunications (tels que par exemple GPRS (pour « General Packet Radio Service), « Directed Retry », LSA (pour « Location Service Area », ...etc.) vérifient certaines propriétés..

Les indicateurs de qualité de service sont généralement calculés à partir de données de performance collectées sur différents noeuds du réseau, ces indicateurs de qualité de service pouvant en outre être consolidés spatialement et/ou temporellement. Un exemple d'indicateur de qualité de service est le nombre de handovers par rapport au nombre de communications, que l'on peut suivre par exemple à la journée (ou toute autre période) et par cellule (ou tout autre objet réseau).

A titre d'exemple de sélection de cellules vérifiant un critère basé sur des indicateurs de qualité de service, on pourra sélectionner par exemple toutes les cellules telles que le nombre de handovers par rapport au nombre de communications est supérieur à 300% et dont le temps moyen de prise de canaux est inférieur à 20 secondes.

Les paramètres de topologie du réseau incluent des paramètres tels que par exemple des paramètres de configuration de zones de localisation, tels que notamment le paramètre LAC (pour « Location Area Code ») défini dans la norme GSM.

A titre d'exemple de sélection de cellules vérifiant un critère basé sur des paramètres de topologie du réseau, on pourra sélectionner par exemple toutes les cellules situées en bordure d'une zone de localisation (identifiée par une valeur donnée du paramètre LAC).

Les paramètres de relation de voisinage entre cellules incluent notamment, pour chaque cellule, une liste de cellules dites cellules voisines. On rappelle que d'une manière générale, dans ces systèmes, des mécanismes de changement de cellule sont prévus, permettant de maintenir une connexion lorsqu'une station mobile passe d'une zone couverte par une cellule à une zone couverte par une autre cellule. Une décision de changement de cellule est prise notamment sur la base de résultats de mesures radio effectuées sur des cellules voisines d'une cellule serveuse courante. Pour chaque cellule, une liste de cellules voisines est ainsi définie, cette liste étant généralement communiquée aux stations mobiles par le réseau radio.

A titre d'exemple de sélection de cellules vérifiant un critère basé sur des paramètres de relations de voisinage entre cellules, on pourra sélectionner par exemple toutes les cellules qui sont dans une liste de cellules voisines établie pour une cellule donnée (identifiée par un identifiant de cellule donné).

Les caractéristiques d'une cellule peuvent inclure des paramètres tels que :
- le type: par exemple microcellule, macrocellule, ...etc.,
- le spectre de fréquences : par exemple 900 MHz, 1800 MHz, ...etc.,
- la technologie d'accès radio : par exemple GSM (« Global System for Mobile communications »), GPRS (« General Packet Radio Service »), EDGE (« Enhanced Data rates for GSM Evolution »), UMTS (« Universal Mobile Telecommunications System») ...etc.

A titre d'exemple de sélection de cellules vérifiant un critère basé sur des caractéristiques de cellules, on pourra sélectionner par exemple toutes les microcellules GSM, ou encore toutes les cellules dont le sepctre de fréquences correspond à 900 MHz.

A titre d'exemple de sélection de cellules vérifiant un critère de type géo-marketing, on pourra sélectionner par exemple toutes les cellules correspondant à une zone d'activités telle que par exemple une zone de bureaux, un centre commercial, ...etc.

A titre d'exemple de sélection de cellules vérifiant un critère de type géographique, on pourra sélectionner par exemple toutes les cellules traversées par un axe routier ou ferroviaire, ...etc.

Au moins un critère d'appartenance à une classe opérationnelle ayant été défini, comme il vient d'être illustré au moyen de divers exemples, une classe opérationnelle peut être constituée. En d'autres termes une classe opérationnelle est constituée à partir de cellules vérifiant ledit au moins un critère ; ceci peut être effectué par tout moyen ne nécessitant pas d'être décrit ici de manière détaillée, par exemple manuellement ou automatiquement. Une classe opérationnelle peut en outre être constituée dynamiquement, la contribution des cellules à la constitution d'une classe opérationnelle pouvant en effet évoluer dans le temps ; ceci permet d'inclure des cellules qui vérifient pour la première fois ledit au moins un critère, ou au contraire d'exclure des cellules qui ne vérifient plus ce critère.

Une classe opérationnelle peut être utilisée dans toute opération d'optimisation de réseau radio, par exemple :
- des fonctions d'optimisation de paramétrage radio : des valeurs optimales pour un tel paramétrage (ou « tuning ») peuvent alors être appliquées en une seule opération à toutes les cellules d'une même classe opérationnelle,
- des fonctions de suivi ou analyse de la qualité de service : l'opérateur peut suivre globalement la qualité de service pour toutes les cellules d'une classe opérationnelle ; il peut par exemple étudier l'évolution dans le temps de la qualité de service pour une même classe opérationnelle,
- des fonctions d'analyse cartographique : l'opérateur peut par exemple paramétrer un facteur de zoom ou une légende sur un fond de carte (sur lequel est affiché son réseau) selon les classes opérationnelles définies ; par exemple les cellules d'une même classe opérationnelle peuvent être affichées au moyen d'une icone spécifique,
- des fonctions de diagnostic de problème : la classe opérationnelle peut être utilisée par exemple dans la définition de scenario de diagnostic,
- ...etc.

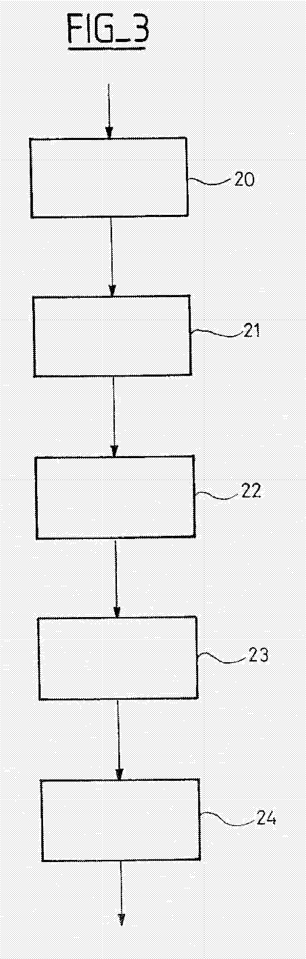

Suivant un de ses différents aspects, la présente invention propose un procédé pour l'exploitation d'un réseau cellulaire de communications mobiles, comportant, comme illustré sur la figure 3 :
- une étape 20 de définition d'au moins un critère d'appartenance de cellules à au moins un groupe de cellules, dit classe opérationnelle,
- une étape 21 de définition d'au moins une règle permettant d'associer différentes cellules d'une même classe opérationnelle à différents modes de réalisation d'au moins une opération d'optimisation de réseau radio,
- une étape 22 de constitution d'au moins une classe opérationnelle, sur la base dudit au moins un critère,
- une étape 23 d'association de différentes cellules d'une même classe opérationnelle à différents modes de réalisation d'au moins une opération d'optimisation de réseau radio, sur la base de ladite au moins une règle,
- une étape 24 de réalisation d'au moins une opération d'optimisation de réseau radio, pour l'ensemble des cellules d'une même classe opérationnelle, et selon différents modes de réalisation associés à différentes cellules de ladite classe.

A titre d'exemple de règles permettant d'associer différentes cellules d'une même classe opérationnelle à différents modes de réalisation d'au moins une opération d'optimisation de réseau radio, on peut citer par exemple:
- des règles à vérifier par au moins un indicateur de qualité de service ; par exemple, un temps moyen de prise de canaux sur la cellule inférieur à 30 secondes, ou un nombre de handovers par rapport au nombre de communications dans la cellule supérieur à 200 %, pourra être considéré comme correspondant à une cellule dite « voie rapide » (couvrant un axe de communication rapide tel que autoroute, voie ferrée, ...etc.), ou au contraire un temps moyen de prise de canaux sur la cellule supérieur à 30 secondes, ou un nombre de handovers par rapport au nombre de communications dans la cellule inférieur à 200 %, pourra être considéré comme correspondant à une cellule dite « normale »,
- des règles à vérifier par au moins un paramètre de mesure de trafic dans une cellule : par exemple on pourra vérifier si le trafic dans une cellule est en forte augmentation (correspondant par exemple au cas de cellule dans une zone touristique et en période de congés, ou encore au cas de cellule couvrant un événement spécifique tel que par exemple manifestation, événement sportif, ...etc.) ou au contraire relativement stable (correspondant au contraire à des cellules dites « normales »),
- ...etc.

A titre d'exemple de différents modes de réalisation d'une opération d'optimisation de réseau radio, on peut citer par exemple :
- l'utilisation de différentes valeurs de référence (ou valeurs « par défaut ») pour des opérations de réglage de paramètres radio (appelées aussi opérations de « tuning ») ; à titre d'exemple de paramètre radio, dans l'exemple considéré précédemment de cellules dites « voie rapide » et de cellules dites « normales », on pourra considérer un paramètre de handover (tel que par exemple un paramètre de temporisation pour une détection de meilleure cellule) ; par exemple, une première plage de valeurs pour ce paramètre (par exemple une plage de valeurs relativement faibles, par exemple entre 1 s et 3s) pourra être associée à des cellules dites « voie rapide », ou au contraire une deuxième plage de valeurs pour ce paramètre (par exemple une plage de valeurs relativement plus élevées, par exemple entre 15 s et 25 s) pourra être associée à des cellules dites « normales »,
- l'utilisation de différentes valeurs de seuil de qualité de service, à comparer à différents indicateurs de qualité de service, pour des opérations d'analyse et/ou de suivi de la qualité de service,
- l'utilisation de différents paramètres utilisés pour la définition de scenario de diagnostic, dans des opérations de diagnostic de problème,
- ...etc.

Avantageusement, ladite étape d'association est effectuée dynamiquement, afin de tenir compte de cellules vérifiant pour la première fois ladite au moins une règle, ou au contraire de cellules ne vérifiant plus cette règle, permettant ainsi de prévenir toute dégradation de la qualité de service dans le réseau.

La présente invention permet ainsi notamment de gérer/optimiser/étudier le réseau à un niveau macroscopique, permettant ainsi de simplifier et/ou faciliter le travail de l'opérateur, notamment dans le cas d'accroisement de trafic, d'extension du réseau, d'introduction de nouvelles technologies et/ou de nouvelles fonctionnalités ...etc.

Par ailleurs, outre un procédé tel qu'illustré ci-dessus au moyen de divers exemples, un autre objet de la présente invention est un système pour l'exploitation d'un réseau cellulaire de communications mobiles, ledit système comportant, d'une manière générale:
- des moyens pour définir au moins un critère d'appartenance de cellules à au moins un groupe de cellules, dit classe opérationnelle,
- des moyens pour définir au moins une règle permettant d'associer différentes cellules d'une même classe opérationnelle à différents modes de réalisation d'au moins une opération d'optimisation de réseau radio,
- des moyens pour constituer au moins une classe opérationnelle, sur la base dudit au moins un critère,
- des moyens pour associer différentes cellules d'une même classe opérationnelle à différents modes de réalisation d'au moins une opération d'optimisation de réseau radio, sur la base de ladite au moins une règle,
- des moyens pour réaliser au moins une opération d'optimisation de réseau radio, pour l'ensemble des cellules d'une même classe opérationnelle, et selon différents modes de réalisation associés à différentes cellules de ladite classe.

Un autre objet de la présente invention est une station de travail pour l'exploitation d'un réseau cellulaire de communications mobiles, ladite station comportant, d'une manière générale:
- des moyens (tels que notamment des moyens d'interface homme-machine) pour permettre à l'utilisateur de définir au moins un critère d'appartenance de cellules à au moins un groupe de cellules, dit classe opérationnelle,
- des moyens (tels que notamment des moyens d'interface homme-machine) pour permettre à l'utilisateur de définir au moins une règle permettant d'associer différentes cellules d'une même classe opérationnelle à différents modes de réalisation d'au moins une opération d'optimisation de réseau radio,
- des moyens (tels que notamment des moyens d'interface homme-machine) pour permettre à l'utilisateur de réaliser au moins une opération d'optimisation de réseau radio, pour l'ensemble des cellules d'une même classe opérationnelle, et selon différents modes de réalisation associés à différentes cellules de ladite classe.

Par exemple, dans le cas de station de travail utilisant une interface avec l'utilisateur de type « interface graphique », ou GUI (pour « Graphical User Interface ») utilisant des moyens de dialogue avec l'utilisateur (tels que par exemple menus, fenêtres associées à différents contextes, ...etc.) un menu spécifique peut être utilisé, pour offrir à l'utilisateur la possibilité de définir des classes opérationnelles. Ce menu peut par exemple commander l'affichage d'une fenêtre offrant à l'utilisateur la possibilité de définir un critère ou une combinison de plusieurs critères. L'opérateur peut aussi ajouter une liste de cellules (en fournisssant les identifiants de ces cellules) à un ensemble de cellules (constitué automatiquement) vérifiant le ou les critères choisis. Il est aussi possible de définir seulement une liste de cellules (et non de définir un ou plusieurs critères associés).

La réalisation particulière de tels moyens ne présentant pas de difficulté particulière pour l'homme du métier, de tels moyens ne nécessitent pas d'être décrits ici de manière plus détaillée que ce qui a été fait précédemment, par leur fonction.

## Revendications

1. Procédé pour l'exploitation d'un réseau cellulaire de communications mobiles, ledit procédé comportant des étapes de :
- définition (20) d'au moins un critère d'appartenance de cellules à au moins un groupe de cellules, dit classe opérationnelle,
- définition (21) d'au moins une règle permettant d'associer différentes cellules d'une même classe opérationnelle à différents modes de réalisation d'au moins une opération d'optimisation de réseau radio,
- constitution (22) d'au moins une classe opérationnelle, sur la base dudit au moins un critère,
- association (23) de différentes cellules d'une même classe opérationnelle à différents modes de réalisation d'au moins une opération d'optimisation de réseau radio, sur la base de ladite au moins une règle,
- réalisation (24) d'au moins une opération d'optimisation de réseau radio, pour l'ensemble des cellules d'une même classe opérationnelle, et selon différents modes de réalisation associés à différentes cellules de ladite classe.

2. Procédé selon la revendication 1, dans lequel ladite étape de constitution (22) est effectuée dynamiquement.

3. Procédé selon l'une des revendications 1 ou 2, dans lequel ladite étape d'association (23) est effectuée dynamiquement.

4. Procédé selon l'une des revendications 1 à 3, dans lequel différents modes de réalisation d'au moins une opération d'optimisation de réseau radio correspondent à l'utilisation de différentes valeurs de référence (ou valeurs « par défaut ») pour des opérations de réglage de paramètres radio.

5. Procédé selon l'une des revendications 1 à 3, dans lequel différents modes de réalisation d'au moins une opération d'optimisation de réseau radio correspondent à l'utilisation de différentes valeurs de seuil de qualité de service, pour des opérations d'analyse et/ou de suivi de la qualité de service.

6. Procédé selon l'une des revendications 1 à 3, dans lequel différents modes de réalisation d'au moins une opération d'optimisation de réseau radio correspondent à l'utilisation de différents paramètres utilisés pour la définition de secnario de diagnostic, dans des opérations de diagnostic de problème,

7. Système pour l'exploitation d'un réseau cellulaire de communications mobiles, ledit système comportant :
- des moyens pour définir au moins un critère d'appartenance de cellules à au moins un groupe de cellules, dit classe opérationnelle,
- des moyens pour définir au moins une règle permettant d'associer différentes cellules d'une même classe opérationnelle à différents modes de réalisation d'au moins une opération d'optimisation de réseau radio,
- des moyens pour constituer au moins une classe opérationnelle, sur la base dudit au moins un critère,
- des moyens pour associer différentes cellules d'une même classe opérationnelle à différents modes de réalisation d'au moins une opération d'optimisation de réseau radio, sur la base de ladite au moins une règle,
- des moyens pour réaliser au moins une opération d'optimisation de réseau radio, pour l'ensemble des cellules d'une même classe opérationnelle, et selon différents modes de réalisation associés à différentes cellules de ladite classe.

8. Station de travail pour l'exploitation d'un réseau cellulaire de communications mobiles, ladite station comportant :
- des moyens pour permettre à l'utilisateur de définir au moins un critère d'appartenance de cellules à au moins un groupe de cellules, dit classe opérationnelle,
- des moyens pour permettre à l'utilisateur de définir au moins une règle permettant d'associer différentes cellules d'une même classe opérationnelle à différents modes de réalisation d'au moins une opération d'optimisation de réseau radio,
- des moyens pour permettre à l'utilisateur de réaliser au moins une opération d'optimisation de réseau radio, pour l'ensemble des cellules d'une même classe opérationnelle, et selon différents modes de réalisation associés à différentes cellules de ladite classe.
